# EUROPEAN PATENT SPECIFICATION

(11) **EP 3 679 802 B1**
(45) Date of publication and mention of the grant of the patent: **22.01.2025**
(21) Application number: 19215297.3
(22) Date of filing: 11.12.2019
(51) Int. Cl.: A23C 19/068, A01J 25/12

(54) **FOOD PRODUCT BASED ON MOZZARELLA STUFFED WITH SMALL MOZZARELLA AND CREAM**
NAHRUNGSMITTEL AUF DER BASIS VON MOZZARELLA MIT FÜLLUNG AUS KLEINEM MOZZARELLA UND SAHNE
PRODUIT ALIMENTAIRE À BASE DE MOZZARELLA FARCI DE PETITE MOZZARELLA ET DE CRÈME

(30) Priority: 10.01.2019 IT 201900000394
(43) Date of publication of application: 15.07.2020
(73) Proprietor: Azienda Agrobufalina Ponterotto S.r.l. Soietà Agricola, 81030 Saint' Arpino (CE) (IT)
(72) Inventor: DI SANTO, Antonio, I-81030 SANT'ARPINO (CE) (IT); DI SANTO, Francesco, I-81030 SANT'ARPINO (CE) (IT)
(74) Representative: Fiammenghi, Eva

(56) References cited:
- US-A1- 2018 352 825
- ANONYMOUS: "La Figliata - Mozzarella che contiene piccole mozzarelline Kg. 1", 19 September 2018 (2018-09-19), www.amazon.it, pages 1 - 4, XP055599760, Retrieved from the Internet <URL:https://web.archive.org/web/20190626113132/https://www.amazon.it/Figliata-Mozzarella-contiene-piccole-mozzarelline/dp/B07HHDRG4M> [retrieved on 20190626]
- DATABASE GNPD [online] MINTEL; 3 September 2009 (2009-09-03), ANONYMOUS: "Mozzarella Cheese Braid", XP055599725, retrieved from www.gnpd.com Database accession no. 1160183
- ANONYMOUS: "Burrata - Wikipedia", 20 November 2018 (2018-11-20), https://en.wikipedia.org, pages 1 - 3, XP055599685, Retrieved from the Internet <URL:https://en.wikipedia.org/w/index.php?title=Burrata&oldid=869839300> [retrieved on 20190626]
- JESS KAPADIA: "You Can Totally Do This: How To Make Fresh Burrata - Food Republic", 20 April 2017 (2017-04-20), www.foodrepublic.com, pages 1 - 4, XP055600038, Retrieved from the Internet <URL:https://web.archive.org/web/20170420211212/https://www.foodrepublic.com/2014/04/29/make-fresh-burrata/> [retrieved on 20190627]
- OBERG C J ET AL: "MICROSTRUCTURE OF MOZZARELLA CHEESE DURING MANUFACTURE", FOOD STRUCTURE, SCANNING MICROSCOPY INTERNATIONAL, CHICAGO, IL, US, vol. 12, 1 January 1993 (1993-01-01), pages 251 - 258, XP000198233, ISSN: 1046-705X

## Description

### Field of the invention

The present invention relates to a food product based on mozzarella stuffed with small mozzarella and cream.

The invention is applicable to any sector where such a type of product can be advantageously used, but preferably it relates to the dairy sector.

### Prior art

As is known, mozzarella is a food product derived from milk or a dairy product typical of many Italian regions, once obtained with exclusively buffalo milk, currently also with mixed buffalo and cow's milk, or just cow's milk. Currently the range of dairy products offers a wide variety of uses in the culinary field and mozzarella is among the most used products, as it can be consumed fresh, or transformed into hot dishes (for example pizza, pasta) or even into takeaway food products such as sandwiches, pizzas, wraps, etc.

Its preparation generally consists in forming first a curd which, broken up, deprived of the serum, is then matured for a few hours, is immersed in water at 80-90°C and worked so as to obtain a sort of filamentous string from which various shapes and sizes are obtained.

Various types of mozzarella and related production processes of these food products are already known in the art and for this purpose we may mention patent No. 0001415499 of 04.24.2015 relating to an innovative flavoring mixture obtained by dissolution and development in pasteurized milk of milk enzymes and yeasts.

More specifically, we also mention patent IT1404599B1 of 11.22.2013 which discloses a food forming machine, capable of making a burrata that is resistant and intact up to its consumption.

Another document to be mentioned concerns the product article "La Figliata - Mozzarella che contiene piccole mozzarelline Kg.1" which was available for sale on the website www.amazon.it on the 19 September 2018 (https://web.archive.org/web/20190626113132/https://www.amazon.it/Figliata-Mozzarella-contiene-piccole-mozzarelline/dp/B07HHDRG4M), which shows a simple Italian food product consisting of a "*large mozzarella that contains many small mozzarella balls inside excellent cream*". Another document concerns the patent US 2018/0352825 A1 of 13 December 2018, which refers to a method of production and packaging of mozzarella cheese braid based on cow or buffalo milk and flavored with at least a little salt and cream, able to facilitate its treatment and improve its shelf life.

Another document to be mentioned concerns the one present in the Mintel Global New Products Database with accession number 1160183, and which basically refers to the existence on the market since 3 September 2009 of an Italian food product under the name "Mozzarella Cheese Braid", which has been hand plated and in which the ingredients are milk, salt, rennet, ferment lactic and citric acid.

In reality the aforesaid inventions, as well as most of those existing in the prior art, although valid from the technical-implementation point of view, constitute a non-conflictual aspect with the object of the present invention, since this is oriented mainly to obtaining a food product with well-defined and totally innovative features.

The main object of the present invention is therefore in general that of making an innovative food product based on a dairy product and more specifically a mozzarella having a totally unique taste and specifically variable in terms of taste and intensity by the user himself during consumption.

Still more specifically, the object of the present invention is generally to provide a food product consisting of a compartmentalized mozzarella, all made entirely from dairy products also variously flavored, able to give the user of the product a right balance of flavors.

A more particular object is to provide a food product based on mozzarella made up of at least two compartments, the opening of which by the user during use releases more or less intense flavors that can be mixed as desired by the user himself.

Other advantages of the invention will become apparent from the detailed description of embodiments thereof provided by way of example, illustrated below

### Description of the invention

The present patent application for industrial invention aims to describe and claim an innovative dairy food product and more specifically an inventive mozzarella in constitutive terms as well as for the organoleptic properties that can be given to consumers.

The invention is defined in the most general way in appended independent claim 1.

The dependent claims relate to specific embodiments thereof.

The innovative concept underlying the present invention consists in providing a mozzarella, also called main mozzarella, having the classic shape but made in a hollow mode, in which the portion forming the main casing, .i.e. the outer layer, contains and protects both the small mozzarella balls immersed in a liquid or semi-liquid dairy product and at least one further secondary mozzarella, also called hollow internal mozzarella, with a portion that forms the casing of the internal mozzarella, which contains and protects further small mozzarella balls, also immersed in a liquid or semi-liquid dairy product.

The present invention is particularly characterized in that said small size small mozzarella balls are flavored. However, for the purposes of the present invention, it should be understood that each compartment of the main mozzarella, i.e. each internal mozzarella and the main compartment between the internal mozzarella and the main casing, will contain the mozzarella balls together with the cream in a variably flavored state. What has been said causes each compartment inside the mozzarella to have a characteristic aroma and this solution constitutes an optimal compromise, since it will be possible to make innumerable types of mozzarella according to the present invention with unique organoleptic features, simply by varying the flavors of the contents in the various compartments and paying particular attention to the various combinations that will be obtained when the consumer will break the aforementioned casings, putting the different aromatic contents in contact. Consequently, thanks to the invention it will be possible to achieve an effective combination of the aforementioned flavored components, which will come into contact as a result of the aforementioned openings, both in terms of taste and in terms of taste intensity by the consumer simply by adjusting the size of the cut of the outer casing and the casing of the internal mozzarella, from which the aforesaid aromatized contents will emerge. In fact, upon completion of the manufacture it is provided, in a specific embodiment defined in appended dependent claim 5, that also the liquid or semi-liquid dairy product, as well as the cream, contained in the compartments can be specifically flavored.

Generally, the inventive mozzarella has an overall size ranging between 300 g and 3,500 g, more preferably between 450 g and 3,000 g and even more preferably between 600 g and 2,000 g.

Generally, as for the small mozzarella balls contained in the main mozzarella and in the secondary mozzarella, these are of small size variable between 6 g and 12 g and more preferably between 8 g and 10 g, while as regards the total number thereof, since this is a dimension depending on the main mozzarella it varies between 5 and 60 more preferably between 10 and 40, according to the embodiment of appended claim 4.

The features of the present invention will be described in the following description of one or more specific embodiments.

### Brief description of the drawings

The foregoing advantages, as well as other advantages and features of the present invention, will be illustrated with reference to the accompanying figures, which are to be considered purely illustrative to the effects of the present patent application, in which:
- Figure 1 represents a perspective view in elevated position of an inventive mozzarella;
- Figure 2 represents a perspective view in elevated position of the section of an inventive mozzarella;
- Figure 3 is a front plan view of the section of an inventive mozzarella.

### Description of some preferred embodiments of the invention

The present invention will now be described in detail with reference to the figures and to a preferred embodiment thereof shown herein, in which identical numerical references have been used in all the figures for the same components.

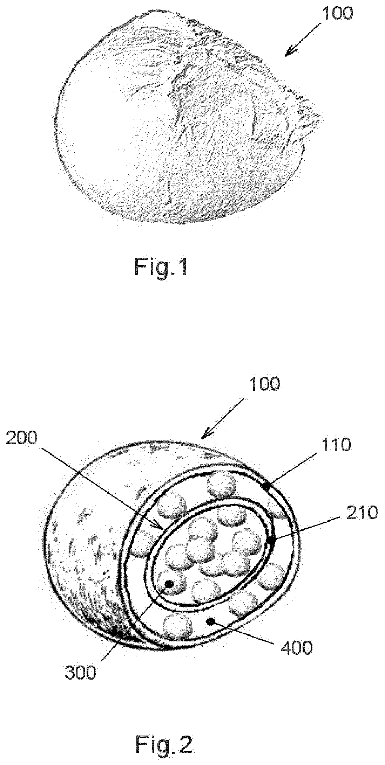

Referring to Figures 1-3, these show a food product based on mozzarella stuffed with small mozzarella and cream.

Fig. 1 is a perspective view in elevated position of the inventive mozzarella, called main mozzarella 100, characterized by an external conformation totally typical to that of the common mozzarellas on the market. With reference to Fig. 2, instead, the internal conformation of the main mozzarella 100 is highlighted in section, characterized in that it is made in a hollow mode, in which the portion forming the main casing 110, .i.e. the outer layer, contains and protects both the small mozzarella 300 immersed in a liquid or semi-liquid dairy product 400 and at least one further internal mozzarella 200, also hollow, with a portion that forms the casing of the internal mozzarella 210, which contains and protects further small mozzarella 300, also immersed in a liquid or semi-liquid dairy product 400.

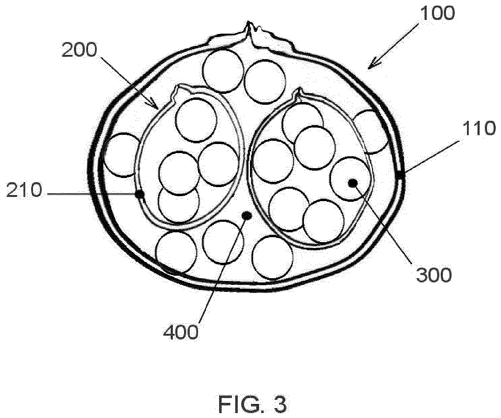

A further aspect, just outside all the technical solutions described thus far but of particular relevance in the implementation of the invention, referring to Fig. 3, is represented by a preferred embodiment consisting of two internal mozzarella 200, that is to say that in this embodiment the main mozzarella 100 contains and protects through the relative portion constituting the main casing 110, both the small size mozzarella 300 immersed in a liquid or semi-liquid dairy product 400 and the two internal mozzarellas 200 which in turn contain and protect, through the relative portions constituting the casings of the internal mozzarella 210, the further small mozzarella 300 also immersed in a liquid or semi-liquid milk product 400. As regards the aforementioned liquid or semi-liquid dairy product 400 it should be noted that preferably this consists of cream and even more preferably of cream derived from cow's milk. With reference instead to the type of milks used for the production of the main mozzarella 100 and of the internal mozzarella 200, this includes cow's milk and more preferably buffalo milk.

With regard to the productive method of said inventive food product based on mozzarella stuffed with small mozzarella and cream, it consists in taking the pat of freshly cooked cheese spun of the mozzarella and using appropriate manual movements, hot-forming a bag with open top, in which small mozzarella, the internal mozzarella 200, and cream are then inserted. Once properly stuffed, the bag is closed at the top using the common cutting technique. The fundamental feature in this production technique is that the thickness of the outer layer of the mozzarella, that is to say the portion constituting the main casing 110 of the main mozzarella 100 and of the portion constituting the casing of the internal mozzarella 210 is included in a well-defined interval, so as to give a fair balance consisting of a refined softness of the casing and at the same time a good resistance to mechanical breakage. For this purpose, said thickness must be between 0.2 cm and 1 cm, preferably between 0.4 cm and 0.6 cm and even more preferably equal to 0.5 cm. This feature related to a defined thickness is obtained thanks to a particular processing, rigorously carried out by hand, that is without the common forming machines, during the spinning process of the curd in wooden tubs to obtain the particular resistance.

As far as the aromatization of small size mozzarella is concerned, the inventors of the present patent application have devised a totally innovative procedure consisting in allowing said mozzarella to rest in flavored brines, where it is left to soak for at least 1.5 hours. Specifically, these brines used to aromatize the mozzarella are produced using the well-known technique of buffalo milk grafting, adding salt and natural flavors without any addition of synthetic acidifiers.

As for the aforementioned natural aromas these include a series of natural flavorings capable of imparting a salty, sweet, spicy, smoky, fruity flavor.

## Claims

1. Food product based on mozzarella stuffed with small mozzarella and cream **characterized in that** said mozzarella, called main mozzarella (100), has an external conformation totally typical to that of the common mozzarella on the market, **in that** the internal conformation of the main mozzarella (100) is made in a hollow mode, in which the portion constituting the main casing (110), that is to say, the outer layer, contains and protects both small-sized mozzarella (300) immersed in a liquid or semi-liquid dairy product (400) and at least one further internal mozzarella (200) which is also hollow, in turn provided with a portion constituting the casing of the internal mozzarella (210) which contains and protects further small mozzarella (300), also immersed in a liquid or semi-liquid dairy product (400), **in that** said small-sized mozzarella (300) is flavored and **in that** the main mozzarella (100) has an overall size of between 300 g and 3,500 g, more preferably between 450 g and 3,000 g and much more preferably between 600 g and 2,000 g and the size of the small mozzarella (300) is between 6 g and 12 g and more preferably between 8 g and 10 g, wherein said food product based on mozzarella is further **characterized in that** each single internal mozzarella (200), containing the small mozzarella (300) and the liquid or semi-liquid dairy product (400) has its own flavor and **in that** also the compartment formed between the portion constituting the main casing (110) and the portion constituting the casing of the internal mozzarella (210), containing the small mozzarella (300) and the liquid or semi-liquid dairy product (400), has its own flavor.

2. Food product based on mozzarella according to claim 1, **characterized in that** the liquid or semi-liquid dairy product (400) consists of cream and more preferably of the cream derived from cow's milk.

3. Food product based on mozzarella according to claims 1 and 2, **characterized in that** the milks used for the production of the main mozzarella (100) and of the internal mozzarella (200) comprise cow's milk and more preferably buffalo milk.

4. Food product based on mozzarella according to any one of the preceding claims, **characterized in that** the total number of small mozzarella (300) varies by a value of between 5 and 60, more preferably between 10 and 40.

5. Food product based on mozzarella according to any one of the preceding claims, **characterized in that** the liquid or semi-liquid dairy product (400) is flavored.

6. Food product based on mozzarella according to any one of the preceding claims, **characterized in that** the production method consists in picking up the freshly cooked spun paste of the mozzarella and through appropriate movements exclusively made by hand, forming a superiorly open bag, in which the mozzarella and cream are then inserted, **in that** once suitably stuffed, the bag is closed at the top by means of the common cutting technique, **in that** the thickness of the portion constituting the main casing (110) and of the portion constituting the casing of the internal mozzarella (210) is in a range of between 0.2 cm and 1 cm, preferably between 0.4 cm and 0.6 cm and even more preferably equal to 0.5 cm, and finally **in that** the flavoring of the small mozzarella (300) consists in leaving them immersed for at least 1.5 hours in brine produced by the common buffalo milk whey graft technique, by adding salt, natural flavors and without the addition of synthetic acidifiers.

7. Food product based on mozzarella according to any one of the preceding claims, **characterized in that** the aforementioned natural flavors comprise a series of natural flavoring products able to impart a salty, sweet, spicy, smoky, fruity flavor.

## Patentansprüche

1. Nahrungsmittel auf der Basis von Mozzarella, gefüllt mit kleinem Mozzarella und Sahne, **dadurch gekennzeichnet, dass** der Mozzarella, Haupt-Mozzarella (100) genannt, eine äußere Form hat, die völlig typisch zu der des üblichen Mozzarellas auf dem Markt ist, dadurch, dass die innere Form des Haupt-Mozzarellas (100) auf eine hohle Art hergestellt ist, wobei der Abschnitt, der die Haupt-Hülle (110), das heißt, die äußere Schicht, bildet, sowohl kleinen Mozzarella (300), der in ein flüssiges oder halbflüssiges Milchprodukt (400) eingetaucht ist, enthält und schützt, als auch zumindest einen weiteren inneren Mozzarella (200), der ebenfalls hohl ist und seinerseits mit einem Abschnitt versehen ist, der die Hülle der inneren Mozzarellas (210) bildet, die weiteren kleinen Mozzarella (300) enthält und schützt, der ebenfalls in ein flüssiges oder halbflüssiges Molkereiprodukt (400) eingetaucht ist, dadurch, dass der kleine Mozzarella (300) aromatisiert ist und dadurch, dass der Haupt-Mozzarella (100) eine Gesamtgröße zwischen 300 g und 3500 g, stärker bevorzugt zwischen 450 g und 3000 g und viel stärker bevorzugt zwischen 600 g und 2000 g liegt und die Größe des kleinen Mozzarellas (300) zwischen 6 g und 12 g und stärker bevorzugt zwischen 8 g und 10 g liegt, wobei das Nahrungsmittel auf der Basis von Mozzarella weiterhin **dadurch gekennzeichnet ist, dass** jeder einzelne innere Mozzarella (200), der den kleinen Mozzarella (300) und das flüssige oder halbflüssige Milchprodukt (400) enthält, seinen eigenen Geschmack hat, und dadurch, dass auch die Kammer, die zwischen dem Abschnitt, der die Haupt-Hülle (110) bildet, und dem Abschnitt, der die Hülle des inneren Mozzarellas (210), die den kleinen Mozzarella (300) und das flüssige oder halbflüssige Molkereiprodukt (400) enthält, bildet, gebildet ist, ihren eigenen Geschmack hat.

2. Nahrungsmittel auf der Basis von Mozzarella gemäß Anspruch 1, **dadurch gekennzeichnet, dass** das flüssige oder halbflüssige Milchprodukt (400) aus Sahne, und, stärker bevorzugt, aus Sahne, die aus Kuhmilch gewonnen wird, besteht.

3. Nahrungsmittel auf der Basis von Mozzarella gemäß den Ansprüchen 1 und 2, **dadurch gekennzeichnet, dass** die Milch, die zur Herstellung des Haupt-Mozzarellas (100) und des inneren Mozzarellas (200) verwendet wird, Kuhmilch und vorzugsweise Büffelmilch aufweist.

4. Nahrungsmittel auf der Basis von Mozzarella gemäß einem der vorstehenden Ansprüche,
**dadurch gekennzeichnet, dass** die Gesamtzahl kleiner Mozzarellas (300) um einen Wert zwischen 5 und 60, stärker bevorzugt zwischen 10 und 40, variiert.

5. Nahrungsmittel auf der Basis von Mozzarella gemäß einem der vorstehenden Ansprüche, **dadurch gekennzeichnet, dass** das flüssige oder halbflüssige Milchprodukt (400) aromatisiert ist.

6. Nahrungsmittel auf der Basis von Mozzarella gemäß einem der vorstehenden Ansprüche, **dadurch gekennzeichnet, dass** das Herstellungsverfahren darin besteht, dass die frisch gekochte, gesponnene Paste des Mozzarellas aufgenommen wird und durch geeignete Bewegungen, die ausschließlich von Hand ausgeführt werden, ein oben offener Beutel gebildet wird, in den dann der Mozzarella und die Sahne gegeben werden, darin, dass der Beutel, sobald er geeignet gefüllt wurde, an der Oberseite durch die übliche Schneidetechnik verschlossen wird, dadurch, dass die Dicke des Abschnitts, der die Haupthülle (110) bildet, und des Abschnitts, der die Hülle des inneren Mozzarellas (210) bildet, in einem Bereich zwischen 0,2 cm und 1 cm, vorzugsweise zwischen 0,4 cm und 0,6 cm, liegt und sogar noch stärker bevorzugt gleich 0,5 cm ist, und schließlich dadurch, dass das Aromatisieren des kleinen Mozzarellas (300) darin besteht, sie für zumindest 1,5 Stunden in Salzlake, die durch die übliche Büffelmilchmolke-Veredelungstechnik durch Zugeben von Salz, natürlichen Aromen und ohne die Zugabe synthetischer Säuerungsmittel hergestellt wurde, einzutauchen.

7. Nahrungsmittel auf der Basis von Mozzarella gemäß einem der vorstehenden Ansprüche, **dadurch gekennzeichnet, dass** die vorgenannten natürlichen Aromen eine Reihe von natürlichen Aromastoffen, die in der Lage sind, ein salziges, süßes, würziges, rauchiges, fruchtiges Aroma zu verleihen, aufweisen.

## Revendications

1. Produit alimentaire à base de mozzarella fourré de petite mozzarella et de crème, **caractérisé en ce que** ladite mozzarella, appelée mozzarella principale (100), présente une conformation externe totalement typique de celle de la mozzarella courante dans le commerce, **en ce que** la conformation interne de la mozzarella principale (100) est constituée dans un mode creux, dans lequel la partie constituant l'enveloppe principale (110), c'est-à-dire la couche extérieure, contient et protège à la fois de la mozzarella de petite taille (300) immergée dans un produit laitier liquide ou semi-liquide (400) et au moins une autre mozzarella interne (200) qui est également creuse, à son tour pourvue d'une partie constituant l'enveloppe de la mozzarella interne (210) qui contient et protège une autre petite mozzarella (300), également immergée dans un produit laitier liquide ou semi-liquide (400), **en ce que** ladite mozzarella de petite taille (300) est aromatisée et **en ce que** la mozzarella principale (100) présente une taille globale entre 300 g et 3500 g, plus préférentiellement entre 450 g et 3000 g et beaucoup plus préférentiellement entre 600 g et 2000 g et la taille de la petite mozzarella (300) est entre 6 g et 12 g et plus préférentiellement entre 8 g et 10 g, dans lequel ledit produit alimentaire à base de mozzarella est en outre **caractérisé en ce que** chaque mozzarella interne unique (200), contenant la petite mozzarella (300) et le produit laitier liquide ou semi-liquide (400) présente son propre arôme et **en ce que** le compartiment formé entre la partie constituant l'enveloppe principale (110) et la partie constituant l'enveloppe de la mozzarella interne (210), contenant la petite mozzarella (300) et le produit laitier liquide ou semi-liquide (400), présente son propre arôme.

2. Produit alimentaire à base de mozzarella selon la revendication 1, **caractérisé en ce que** le produit laitier liquide ou semi-liquide (400) se compose de crème et plus préférentiellement d'une crème dérivée du lait de vache.

3. Produit alimentaire à base de mozzarella selon les revendications 1 et 2, **caractérisé en ce que** le lait utilisé pour la production de la mozzarella principale (100) et de la mozzarella interne (200) comprend du lait de vache et plus préférentiellement du lait de buffle.

4. Produit alimentaire à base de mozzarella selon l'une des revendications précédentes, **caractérisé en ce que** le nombre total de petite mozzarella (300) varie d'une valeur entre 5 et 60, plus préférentiellement entre 10 et 40.

5. Produit alimentaire à base de mozzarella selon l'une des revendications principales, **caractérisé en ce que** le produit laitier liquide ou semi-liquide (400) est aromatisé.

6. Produit alimentaire à base de mozzarella selon l'une des revendications précédentes, **caractérisé en ce que** le procédé de production se compose de la prise de la pâte filée fraîchement préparée de la mozzarella et, par des mouvements appropriés exclusivement réalisés à la main, la formation d'une poche ouverte en haut, dans laquelle la mozzarella et la crème sont ensuite insérées, **en ce que**, une fois adéquatement garnie, la poche est fermée en haut au moyen de la technique de coupe courante, **en ce que** l'épaisseur de la partie constituant l'enveloppe principale (110) et celle de la partie constituant l'enveloppe de la mozzarella interne (210) sont dans une plage entre 0,2 cm et 1 cm, préférentiellement entre 0,4 cm et 0,6 cm et encore plus préférentiellement égales à 0,5 cm, et enfin **en ce que** l'aromisation de la petite mozzarella (300) consiste à la laisser immergée pendant au moins 1,5 heure dans une saumure produite par la technique de greffe au lactosérum de lait de buffle courante, en ajoutant du sel et des arômes naturels et sans ajouter d'acidifiants synthétiques.

7. Produit alimentaire à base de mozzarella selon l'une des revendications précédentes, **caractérisé en ce que** les arômes naturels susmentionnés comprennent une série de produits aromatisants naturels capables de conférer un arôme salé, doux, épicé, fumé ou fruité.
